# EUROPÄISCHE PATENTSCHRIFT

(11) **EP 2 658 021 B1**
(45) Veröffentlichungstag und Bekanntmachung des Hinweises auf die Patenterteilung: **17.12.2014**
(21) Anmeldenummer: 13161754.0
(22) Anmeldetag: 28.03.2013
(51) Int. Cl.: H01M 8/04

(54) **Verfahren und Regelvorrichtung zur Regelung einer Brennstoffzelle oder eines Brennstoffzellenstapels**
Method and control device for controlling a fuel cell or a fuel cell stack
Procédé et dispositif de réglage destinés à la régulation d'une cellule à combustible ou d'une pile de cellules à combustibles

(30) Priorität: 27.04.2012 EP 12166039
(43) Veröffentlichungstag der Anmeldung: 30.10.2013
(73) Patentinhaber: Hexis AG, 8404 Winterthur (CH)
(72) Erfinder: Mai, Andreas, 78462 Konstanz (DE); Iwanschitz, Boris, 8406 Winterthur (CH); Linder, Markus, 8406 Winterthur (CH); Kuratli, Hanspeter, 8610 Uster (CH)
(74) Vertreter: Intellectual Property Services GmbH

(56) Entgegenhaltungen:
- JP-A- H11 195 423
- JP-A- 2006 085 959
- US-A1- 2010 173 212

## Beschreibung

Die Erfindung betrifft ein Verfahren und eine Regelvorrichtung zur Regelung einer Brennstoffzelle oder eines Brennstoffzellenstapels gemäss Oberbegriff von Anspruch 1 beziehungsweise Oberbegriff von Anspruch 9 sowie eine Brennstoffzelle, einen Brennstoffzellenstapel und ein Brennstoffzellensystem gemäss Oberbegriff von Anspruch 12.

Brennstoffzellen, insbesondere Hochtemperatur-Brennstoffzellen des SOFC-Typs ("Solid Oxid Fuel Cell"), ermöglichen eine Nutzung von Energie eines Brennstoffs durch eine Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden gasförmige Ströme zweier Edukte getrennt durch die Zellen geführt. Das erste Edukt, das insbesondere Umgebungsluft ist, enthält oxidierende Komponenten, das zweite Edukt reduzierende Komponenten. Mit Vorteil wird als zweites Edukt ein Methan enthaltendes Gas (z. B. Erdgas) verwendet, das vor dem Eintritt in die Zellen durch einen Reformer geführt und dort beispielsweise mittels einer zusätzlichen Einspeisung von Wasser und gegebenenfalls Luft und unter Zufuhr von Prozesswärme in die reduzierenden Komponenten Wasserstoff und Kohlenmonoxid umgewandelt wird. Als Quelle für die im Reformer benötigte Prozesswärme kann mit Vorteil das heisse Abgas verwendet werden.

Ein Verfahren zum Betreiben einer Brennstoffzellenbatterie ist beispielsweise aus Dokument EP1 205 993 A1 bekannt. In diesem Verfahren wird eine vom Leistungsbedarf abhängige Regelung der Brennstoffzellenbatterie beschrieben.

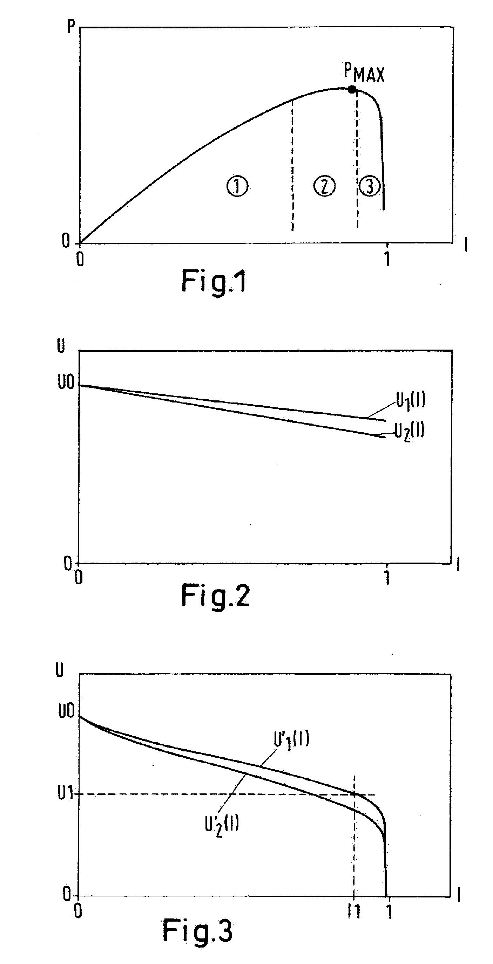

In der Praxis werden Brennstoffzellen und Brennstoffzellenstapel meist in der Nähe der für einen gegebenen Brenngasfluss erzielbaren Maximalleistung betrieben, da dort die Brenngasausnutzung am besten ist. Fig. 1 zeigt eine typische Leistungs-Stromkurve einer Brennstoffzelle. Beim Stromwert I = 1 sind 100 % des verfügbaren Brenngases verbraucht. Unterhalb der Maximalleistung Pₘₐₓ nehmen die Brenngasausnutzung und die Leistungen ab (Bereich ① in Fig. 1), während ein Betrieb oberhalb der Maximalleistung wegen elektrochemischer Oxidation der Anode zu erhöhter bis katastrophaler Alterung führt (Bereich ③ in Fig. 1). Aus Sicherheitsgründen wird deshalb meist ein Betriebspunkt knapp unterhalb der Maximalleistung angestrebt. Diese Wahl des Betriebspunktes entspricht Bereich ② auf der in Figur 1 gezeigten Leistungskurve.

In herkömmlichen Verfahren zur Regelung eines Brennstoffzellenstapels wird entweder der Strom oder die Ausgangsspannung in der Nähe der Maximalleistung konstant gehalten. Bei beiden Methoden können die Brennstoffzelle und der Brennstoffzellenstapel nicht immer in dem in Figur 1 gezeigten optimalen Bereich ② betrieben werden. Regelungstechnisch sind diese beiden Methoden jedoch einfach realisierbar und haben sich für Messungen unter den im Labor herrschenden Betriebsbedingungen bewährt.

In der Praxis ausserhalb des Labors sind die Betriebsbedingungen komplexer, da eine Reihe von Einflussfaktoren, welche den Betriebspunkt beeinflussen, weniger genau bekannt sind als im Labor:
- Innenwiderstand beziehungsweise bei Brennstoffzellenstapel Ebenenwiderstand: Dieser beeinflusst den optimalen Betriebspunkt, ist aber aufgrund von Schwankungen bei der Herstellungsqualität und vor allem aber aufgrund der Zunahme des Innenwiderstandes bzw. Ebenenwiderstands mit der Betriebszeit (Alterung der Brennstoffzelle) nicht bekannt.
- Variierende Brennstoffzusammensetzung (Erdgas-Qualitäten): Im Labor werden Brennstoffzellen meist mit genau definierten Brenngasen (z.B. Wasserstoff oder Methan) betrieben oder bei Verwendung von Erdgas wird die Gasqualität überwacht. Ausserhalb des Labors werden die Geräte mit Erdgas aus dem lokalen Erdgasnetz betrieben. Da das Erdgas aus unterschiedlichen Quellen stammt, kann die Zusammensetzung örtlich und zeitlich schwanken.
- Gasflussmesser: In Brennstoffzellensystemen eingesetzte Flussmesser sind in der Messgenauigkeit den Laborgeräten unterlegen, da meist kostengünstigere Flussmesser eingesetzt werden.
- Leckagen im Brennstoffzellenstapel: Durch kleinere Leckagen im Brennstoffzellenstapel wird ein Teil des Brennstoffs umgesetzt, ohne dass dieser zur Elektrizitätserzeugung zur Verfügung steht. Der genaue Wert ist beim Betrieb nicht bekannt und kann sich mit der Zeit ändern.

Unabhängig von der gewählten Betriebsart muss zwingend vermieden werden, dass die Brennstoffzellen über dem Leistungsmaximum betrieben werden. Dies würde zur Schädigung der Zellen bzw. zu erhöhten Degradationsraten führen.

Abhängig von den Einsatzbedingungen werden unterschiedliche Regelungs- und Betriebsstrategien verwendet. Falls die Brennstoffzelle immer unter konstanten Bedingungen, wie sie zum Beispiel im Labor vorherrschen (konstante Brenngasqualität, Temperatur, Luftfeuchtigkeit etc.), betrieben werden kann, ist eine Regelung der Stromstärke zu bevorzugen. In Fig. 2 sind beispielhaft die Strom-Spannungskennlinien ohne Berücksichtigung des Brenngasverbrauchs für eine neue Brennstoffzelle mit geringem Innenwiderstand (Kennlinie U₁(I)) und für eine gealterte Zelle mit erhöhtem Innenwiderstand (Kennlinie U₂(I)) dargestellt. Verursacht durch Alterungseffekte (Degradation) nimmt der Innenwiderstand der Brennstoffzelle beziehungsweise der Widerstand der Wiederholeinheit eines Brennstoffzellenstapels im Verlauf der Zeit zu.

Berücksichtigt man zusätzlich den Brenngasverbrauch ergeben sich Strom-Spannungskennlinien U'₁(I), U'₂(I) wie in Fig. 3 gezeigt. Die Degradation führt zu einer abgesenkten Spannung bei gleicher Stromstärke (gestrichelte Linie bei I1). Trotz der Zunahme des Innenwiderstandes durch die Degradation bleibt die Stromdichte für den maximalen elektrischen Wirkungsgrad nahezu konstant. Dadurch ist gewährleistet, dass die Zelle innerhalb des idealen Betriebsbereiches, wie in Fig. 1 dargestellt, betrieben werden kann.

Im Einsatz ausserhalb des Labors werden Brennstoffzellen meist mit Erdgas betrieben. Erdgase können stark in ihrer chemischen Zusammensetzung variieren, wobei sowohl örtliche als auch zeitliche Schwankungen auftreten. Mit der Veränderung der Brennstoffqualität ändert sich in der Regel der minimale Luftbedarf (Lₘᵢₙ, Erdgas-Kenngrösse) und auch die in den Prozess eingebrachte Gasmenge, da die Flussregler eine Abhängigkeit von der Gaszusammensetzung aufweisen. Damit ändert sich auch die Stromstärke am Punkt des Leistungsoptimums.

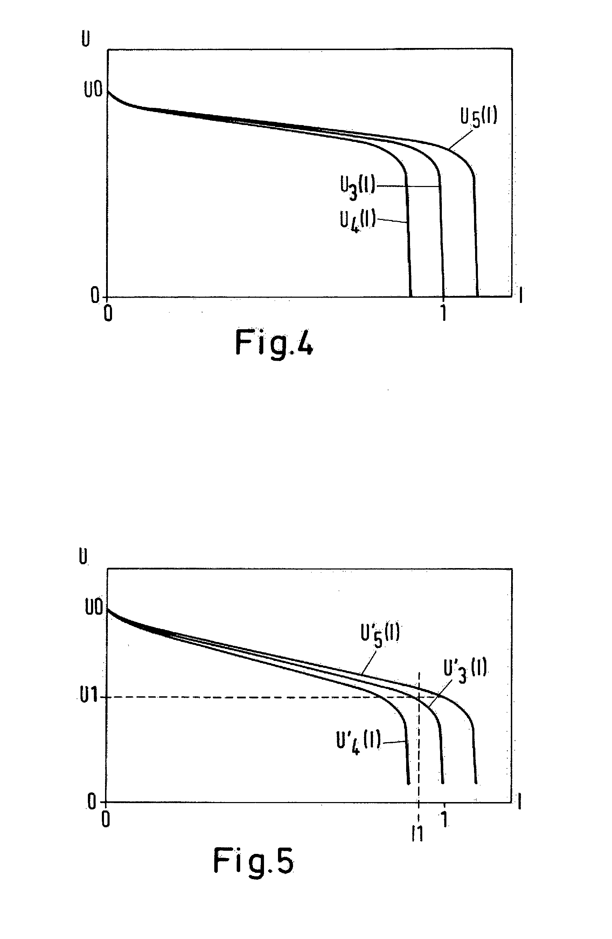

Fig. 4 zeigt drei Strom-Spannungskennlinien U₃(I), U₄(I), U₅(I) unter Berücksichtigung des Gasverbrauchs aber ohne Berücksichtigung des Innenwiderstands. Derartige Kennlinien können mit Hilfe thermodynamischer Berechnungen und mit Hilfe der Nernst-Gleichung berechnet werden. Bei Kennlinie U₃(I) entsprechen Brenngasfluss und -qualität genau den Sollwerten, bei Kennlinie U₄(I) sind der Brenngasfluss kleiner oder die Brenngasqualität schlechter als die Sollwerte, und bei Kennlinie U₅(I) sind der Brenngasfluss grösser oder die Brenngasqualität besser als die Sollwerte.

In Fig. 5 sind die entsprechenden Kennlinien U'₃(I), U'₄(I), U'₅(I) unter Berücksichtigung des Innenwiderstands und des Gasverbrauchs dargestellt. In diesem Fall ist eine Regelung bei konstanter Spannung (gestrichelte Linie bei U1) gegenüber einer Regelung bei konstantem Strom zu bevorzugen, da sie sicherstellt, dass die Zellspannung nicht in den kritischen Bereich kleiner 0.6 V gerät. Unter einer Zellspannung von 0.6 V besteht die Gefahr, dass die Anode elektrochemisch reoxidiert, da das Oxidationspotential des Nickels in diesem Bereich liegt, was zu einer Schädigung der Zellen führt.

Die Regelung mit konstanter Ausgangsspannung hat jedoch den Nachteil, dass in Folge des Alterns der Brennstoffzellen der Strom und damit die Brenngasausnutzung sinken und die Leistungsdegradation mit zunehmender Betriebsdauer höher ist als bei der Regelung mit konstantem Strom (siehe gestrichelte Linien in Fig. 3).

Die alterungsbedingte Degradation des Brennstoffzellenstapels und Variationen in der Zusammensetzung des Erdgases sind unvermeidbare Randbedingungen. Somit sind für Brennstoffzellensysteme die mit Erdgasen betrieben werden, weder die Regelung auf konstante Spannung noch die Regelung auf konstanten Strom die optimale Lösung.

Aufgabe der Erfindung ist es, ein Verfahren und eine Regelvorrichtung zur Regelung einer Brennstoffzelle oder eines Brennstoffzellenstapels zur Verfügung zu stellen, mit denen die Brennstoffzelle oder der Brennstoffzellenstapel in der Nähe der Maximalleistung sicher betrieben werden können und gleichzeitig die Leistungsdegradation in Folge Alterns der Brennstoffzellen geringer ist als bei einer Regelung auf konstante Spannung.

Diese Aufgabe wird erfindungsgemäss durch das in Anspruch 1 definierte Verfahren und die in Anspruch 9 definierte Regelvorrichtung sowie durch die Brennstoffzelle, den Brennstoffzellenstapel und das Brennstoffzellensystem gelöst, die in Anspruch 12 definiert sind.

In dem erfindungsgemässen Verfahren zur Regelung einer Brennstoffzelle oder eines Brennstoffzellenstapels wird eine Strom-Spannungskennlinie der Brennstoffzelle bzw. des Brennstoffzellenstapels erfasst und ausgewertet, um einen Betriebspunkt der Brennstoffzelle bzw. des Brennstoffzellenstapels zu bestimmen. Das Verfahren zeichnet sich dadurch aus, dass im Betrieb in zeitlichen Abständen eine Strom-Spannungskennlinie der Brennstoffzelle bzw. des Brennstoffzellenstapels erfasst wird, deren Steigung ein Minimum hat, dass jeweils aus der erfassten Strom-Spannungskennlinie ein Wert für das Minimum der Steigung oder ein mit dem Minimum der Steigung zusammenhängender Wert Rₘᵢₙ ermittelt wird, dass durch eine mathematische Verknüpfung des ermittelten Wertes mit einem vorbestimmten Offsetwert R_{offset}, beispielsweise durch Addition eines vorbestimmten Offsetwertes zum ermittelten Wert oder durch Multiplikation mit einem vorbestimmten Offsetwert, ein Sollwert für den Betriebspunkt bestimmt wird, und dass die Brennstoffzelle oder der Brennstoffzellenstapel, mit dem derart bestimmten Sollwert geregelt wird.

Vorteilhafterweise werden die Brennstoffzelle oder der Brennstoffzellenstapel über einen regelbaren Verbraucher oder eine regelbare Stromsenke, die mit dem Ausgang der Brennstoffzelle oder des Brennstoffzellenstapels verbunden sind, geregelt, wobei der regelbare Verbraucher beispielsweise ein Spannungswandler oder ein Wechselrichter sein kann, deren Ausgänge mit einem Stromnetz verbunden werden können, um den in der Brennstoffzelle erzeugten Strom in das Stromnetz einzuspeisen.

Der Wert für das Minimum der Steigung kann beispielsweise der Wert des Innenwiderstandes oder des flächenbezogenen Innenwiderstandes, im Englischen Area Specific Resistance oder ASR genannt, der Brennstoffzelle oder des Brennstoffzellenstapels im Minimum der Steigung sein, oder der mit dem Minimum der Steigung zusammenhängende Wert Rₘᵢₙ kann fallweise mit dem Wert des Innenwiderstandes oder des flächenbezogenen Innenwiderstandes der Brennstoffzelle oder des Brennstoffzellenstapels im Minimum der Steigung verknüpft sein. Der flächenbezogene Innenwiderstand berechnet sich aus dem Innenwiderstand einer Brennstoffzelle, indem der Innenwiderstand mit der elektrochemisch aktiven Fläche der Brennstoffzelle multipliziert wird, beziehungsweise indem der Innenwiderstand einer Wiederholeinheit eines Brennstoffzellenstapels mit der elektrochemisch aktiven Fläche einer Wiederholeinheit multipliziert wird.

Mit Vorteil wird der Wert für das Minimum der Steigung oder der mit dem Minimum der Steigung zusammenhängende Wert Rₘᵢₙ mathematisch aus der Strom-Spannungskennlinie ermittelt, beispielsweise numerisch oder durch mathematische Ableitung der Strom-Spannungskennlinie.

In vorteilhaften Ausführungsvarianten wird die Brennstoffzelle oder der Brennstoffzellenstapel spannungsgeführt, d.h. mit einem Sollwert Uₛₒₗₗ für die Zellspannung oder die Ausgangsspannung, oder stromgeführt, d.h. mit einem Sollwert Iₛₒₗₗ für den Strom oder die Stromdichte, geregelt.

In einer vorteilhaften Ausführungsform wird durch Addition eines vorbestimmten Offsetwertes R_{offset} zum Wert Rₘᵢₙ für das Minimum der Steigung bzw. zu dem mit dem Minimum der Steigung zusammenhängenden Wert Rₘᵢₙ zunächst ein Summenwert R_{Summe} = Rₘᵢₙ + R_{offset} ermittelt und mit Hilfe der Strom-Spannungskennlinie ein dem Summenwert entsprechender Wert für die Zellspannung oder Ausgangsspannung Uₛₒₗₗ oder für den Strom oder die Stromdichte Iₛₒₗₗ bestimmt, der für die Regelung der Brennstoffzelle oder des Brennstoffzellenstapels als Sollwert dient.

In einer weiteren vorteilhaften Ausführungsform wird im Betrieb nach mindestens 200 h oder mindestens 500 h oder mindestens 1000 h oder alle 200 h oder 500 h oder alle 1000 h eine Strom-Spannungskennlinie der Brennstoffzelle bzw. des Brennstoffzellenstapels erfasst und aus der jeweils erfassten Strom-Spannungskennlinie der Sollwert neu bestimmt.

Die erfindungsgemässe Regelvorrichtung für eine Brennstoffzelle, einen Brennstoffzellenstapel oder ein Brennstoffzellensystem ist eingerichtet, um die Brennstoffzelle bzw. den Brennstoffzellenstapel bzw. das Brennstoffzellensystem mit einem der oben beschriebenen Verfahren oder einer der zugehörigen Ausführungsformen und -varianten zu regeln.

In einer vorteilhaften Ausführungsform ist die Regelvorrichtung mit einem Ausgang der Brennstoffzelle bzw. des Brennstoffzellenstapels verbunden und enthält eine Mess- und Regeleinheit, die eingerichtet ist, um eine Strom-Spannungskennlinie der Brennstoffzelle bzw. des Brennstoffzellenstapels bzw. des Brennstoffzellensystems zu erfassen und aus der erfassten Strom-Spannungskennlinie einen Wert für das Minimum der Steigung oder einen mit dem Minimum der Steigung zusammenhängenden Wert Rₘᵢₙ zu ermitteln, um durch eine mathematische Verknüpfung des ermittelten Wertes mit einem vorbestimmten Offsetwert R_{offset}, beispielsweise durch Addition eines vorbestimmten Offsetwertes zum ermittelten Wert oder durch Multiplikation mit einem vorbestimmten Offsetwert, einen Sollwert für den Betriebspunkt zu bestimmen, und um die Brennstoffzelle bzw. den Brennstoffzellenstapel bzw. das Brennstoffzellensystem mit dem derart bestimmten Sollwert zu regeln.

In einer weiteren vorteilhaften Ausführungsform enthält die Regelvorrichtung einen regelbaren Verbraucher oder eine regelbare Stromsenke, die mit dem Ausgang der Brennstoffzelle oder des Brennstoffzellenstapels verbunden werden können, um die Brennstoffzelle oder den Brennstoffzellenstapel über den regelbaren Verbraucher beziehungsweise die regelbare Stromsenke zu regeln.

Weiter umfasst die Erfindung eine Brennstoffzelle oder einen Brennstoffzellenstapel oder einen Brennstoffzellensystem mit einer Regelvorrichtung oder Ausführungsform der Regelvorrichtung gemäss oben stehender Beschreibung.

Das Verfahren und die Regelvorrichtung zur Regelung einer Brennstoffzelle oder eines Brennstoffzellenstapels sowie die Brennstoffzelle und der Brennstoffzellenstapel gemäss vorliegender Erfindung haben den Vorteil, dass die Brennstoffzelle bzw. der Brennstoffzellenstapel sicher betrieben werden können, selbst wenn die Betriebsbedingungen im Laufe der Zeit ändern, da Einflussgrössen, wie die Alterung der Brennstoffzellen, die Brennstoffmenge, die Brennstoffqualität und allfällige Leckagen, im Steigungsverlauf der Strom-Spannungskennlinie abgebildet sind. Ein weiterer Vorteil besteht darin, dass die Leistungsdegradation in Folge Alterns der Brennstoffzellen geringer ist als bei einer Regelung mit konstanter Spannung, da bei Änderung des Innenwiderstandes die Sollspannung für die Regelung durch das Verfahren und die Regelvorrichtung gemäss vorliegender Erfindung angepasst werden.

Die obige Beschreibung von Ausführungsformen und -varianten dient lediglich als Beispiel. Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: einen typischen Leistungs-Strom-Verlauf einer Brennstoffzelle,
- Fig. 2: zwei typische Strom-Spannungskennlinien einer Brennstoffzelle für zwei verschiedene Innenwiderstände ohne Berücksichtigung des Gasverbrauchs,
- Fig. 3: zwei typische Strom-Spannungskennlinien einer Brennstoffzelle für zwei verschiedene Innenwiderstände mit Berücksichtigung des Gasverbrauchs,
- Fig. 4: drei typische Strom-Spannungskennlinien einer Brennstoffzelle für drei verschieden Brenngasflüsse oder -qualitäten ohne Berücksichtigung des Innenwiderstandes,
- Fig. 5: drei typische Strom-Spannungskennlinien einer Brennstoffzelle für drei verschieden Brenngasflüsse oder -qualitäten mit Berücksichtigung des Innenwiderstandes,
- Fig. 6: einen typischen Verlauf des Area Specific Resistance (ASR) einer Brennstoffzelle,
- Fig. 7: typische ASR-Verläufe einer neuen und einer gealterten Brennstoffzelle,
- Fig. 8: typische ASR-Verläufe einer Brennstoffzelle bei zwei unterschiedlichen Brenngasflüssen oder -qualitäten, und
- Fig. 9: einen Brennstoffzellenstapel mit einem Ausführungsbeispiel einer Regelvorrichtung gemäss vorliegender Erfindung.

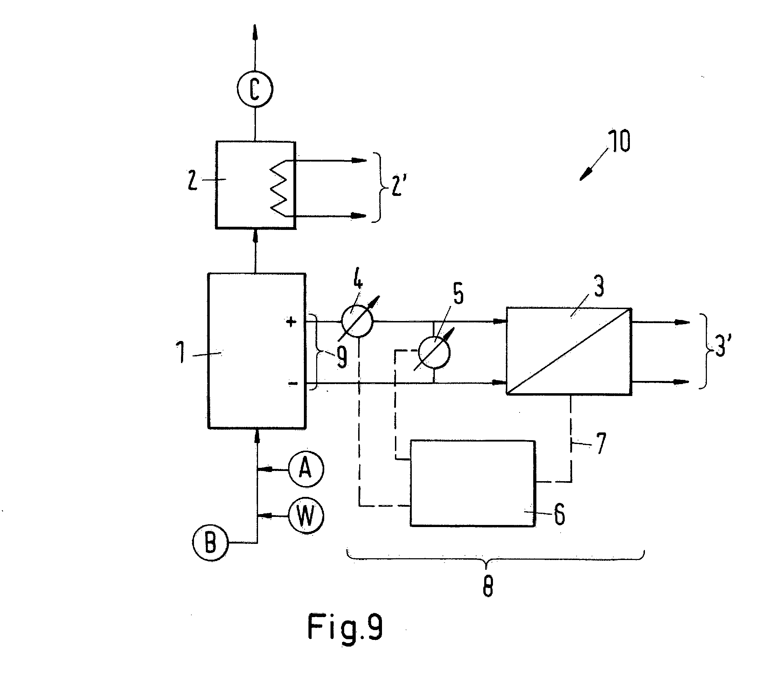

Fig. 9 zeigt einen Brennstoffzellenstapel mit einem Ausführungsbeispiel einer Regelvorrichtung 9 gemäss vorliegender Erfindung. Eine Anordnung eines Brennstoffzellenstapels mit einer Regelvorrichtung wird im Folgenden auch als Brennstoffzellensystem bezeichnet. Der Brennstoffzellenstapel 1 kann beispielsweise aus Hochtemperatur-Brennstoffzellen des SOFC-Typs ("Solid Oxid Fuel Cell") aufgebaut sein, die typisch bei einer Temperatur von 600°C bis 1000°C betrieben werden, und ermöglicht die Nutzung von Energie eines Brennstoffs durch eine Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden gasförmige Ströme zweier Edukte A, B getrennt durch die Zellen geführt. Das erste Edukt A, das insbesondere Umgebungsluft ist, enthält oxidierende Komponenten, das zweite Edukt B reduzierende Komponenten.

Mit Vorteil wird als zweites Edukt B ein Methan enthaltendes Gas (z. B. Erdgas) verwendet, das vor dem Eintritt in die Zellen durch einen Reformer geführt und dort beispielsweise mittels einer zusätzlichen Einspeisung von Wasser W und gegebenenfalls Luft und unter Zufuhr von Prozesswärme in die reduzierenden Komponenten Wasserstoff und Kohlenmonoxid umgewandelt wird. Als Quelle für die im Reformer benötigte Prozesswärme kann mit Vorteil das heisse Abgas verwendet werden.

Der Brennstoffzellenstapel 1 ist in der Regel mit einem Wärmetauscher 2 verbunden, in dem den heissen Abgasen aus dem Brennstoffzellenstapel Wärme entzogen werden kann. Der Wärmetauscher 2 ist mit Vorteil mit einem Heizkreis 2' verbunden. Die Abgase C können anschliessend ins Freie geleitet werden oder der Restsauerstoff in den Abgasen kann in einem zusätzlichen Brenner, der in Fig. 9 nicht gezeigt ist, genutzt werden.

Im gezeigten Ausführungsbeispiel ist eine Regelvorrichtung 8 mit einem Ausgang 9 des Brennstoffzellenstapels 1 verbunden. Die Regelvorrichtung 8 enthält eine Mess- und Regeleinheit 6, die eingerichtet ist, um in zeitlichen Abständen eine Strom-Spannungskennlinie des Brennstoffzellenstapels zu erfassen, deren Steigung ein Minimum hat, beispielsweise mittels eines Stromaufnehmers 4 und eines Spannungsaufnehmers 5, und aus der erfassten Strom-Spannungskennlinie einen Wert für das Minimum der Steigung oder einen mit dem Minimum der Steigung zusammenhängenden Wert Rₘᵢₙ zu ermitteln, um durch eine mathematische Verknüpfung des ermittelten Wertes mit einem vorbestimmten Offsetwert R_{offset}, beispielsweise durch Addition eines vorbestimmten Offsetwertes zum ermittelten Wert, einen Sollwert für den Betriebspunkt zu bestimmen, und um den Brennstoffzellenstapel 1 mit dem derart bestimmten Sollwert zu regeln.

In einer vorteilhaften Ausführungsform enthält die Regelvorrichtung 8 zusätzlich einen regelbaren Verbraucher oder eine regelbare Stromsenke 3, die mit dem Ausgang 9 des Brennstoffzellenstapels verbunden ist, um die Brennstoffzelle oder den Brennstoffzellenstapel über den regelbaren Verbraucher beziehungsweise die regelbare Stromsenke zu regeln. Hierzu kann die Mess- und Regeleinheit 6 über eine Leitung 7 mit dem regelbaren Verbraucher beziehungsweise der regelbaren Stromsenke verbunden sein.

Vorteilhafterweise ist der regelbare Verbraucher 3 ein Spannungswandler oder ein Wechselrichter, deren Ausgänge mit einem Stromnetz 3' verbunden werden können, um den im Brennstoffzellenstapel erzeugten Strom in das Stromnetz einzuspeisen.

Weiter umfasst die Erfindung eine Brennstoffzelle oder einen Brennstoffzellenstapel 1 oder einen Brennstoffzellensystem mit einer Regelvorrichtung oder Ausführungsform der Regelvorrichtung gemäss oben stehender Beschreibung.

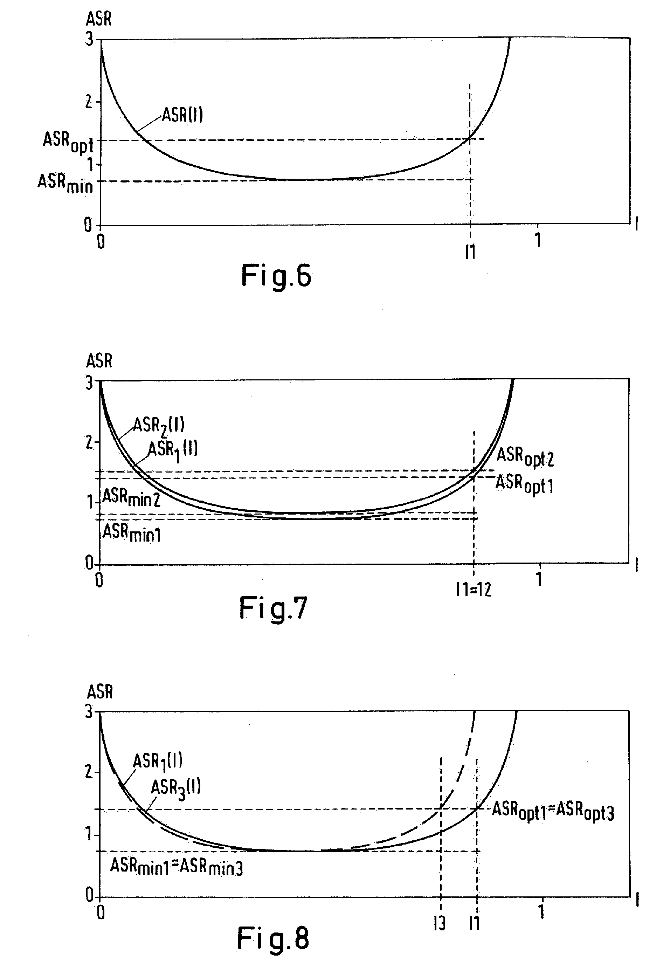

Ein Ausführungsbeispiel eines Verfahrens gemäss vorliegender Erfindung wird im Folgenden an Hand der Figuren 6 bis 9 beschrieben. In dem Verfahren zur Regelung einer Brennstoffzelle oder eines Brennstoffzellenstapels 1 wird eine Strom-Spannungskennlinie der Brennstoffzelle bzw. des Brennstoffzellenstapels erfasst und ausgewertet, um einen Betriebspunkt der Brennstoffzelle bzw. des Brennstoffzellenstapels zu bestimmen. Das Verfahren zeichnet sich dadurch aus, dass im Betrieb in zeitlichen Abständen eine Strom-Spannungskennlinie der Brennstoffzelle bzw. des Brennstoffzellenstapels erfasst wird, deren Steigung ein Minimum hat, dass jeweils aus der erfassten Strom-Spannungskennlinie ein Wert für das Minimum der Steigung oder ein mit dem Minimum der Steigung zusammenhängender Wert Rₘᵢₙ ermittelt wird, dass durch eine mathematische Verknüpfung des ermittelten Wertes mit einem vorbestimmten Offsetwert R_{offset}, beispielsweise durch Addition eines vorbestimmten Offsetwertes zum ermittelten Wert, ein Sollwert für den Betriebspunkt bestimmt wird, und dass die Brennstoffzelle oder der Brennstoffzellenstapel, mit dem derart bestimmten Sollwert geregelt wird.

Vorteilhafterweise werden die Brennstoffzelle oder der Brennstoffzellenstapel 1 über einen regelbaren Verbraucher oder eine regelbare Stromsenke 3, die mit dem Ausgang 9 der Brennstoffzelle oder des Brennstoffzellenstapels 1 verbunden sind, geregelt, wobei der regelbare Verbraucher 3 beispielsweise ein Spannungswandler oder ein Wechselrichter sein kann, deren Ausgänge 3' mit einem Stromnetz verbunden werden können, um den in der Brennstoffzelle bzw im Brennstoffzellenstapel erzeugten Strom in das Stromnetz einzuspeisen.

Der Wert für das Minimum der Steigung kann beispielsweise der Wert des Innenwiderstandes oder des flächenbezogenen Innenwiderstandes, im Englischen Area Specific Resistance oder ASR genannt, der Brennstoffzelle oder des Brennstoffzellenstapels im Minimum der Steigung sein, oder der mit dem Minimum der Steigung zusammenhängende Wert Rₘᵢₙ kann fallweise mit dem Wert des Innenwiderstandes oder des flächenbezogenen Innenwiderstandes der Brennstoffzelle oder des Brennstoffzellenstapels im Minimum der Steigung verknüpft sein. Der flächenbezogene Innenwiderstand ASR berechnet sich aus dem Innenwiderstand einer Brennstoffzelle, indem der Innenwiderstand mit der elektrochemisch aktiven Fläche der Brennstoffzelle multipliziert wird, beziehungsweise indem der Innenwiderstand einer Wiederholeinheit eines Brennstoffzellenstapels der elektrochemisch aktiven Fläche einer Wiederholeinheit multipliziert wird.

Mit Vorteil wird der Wert für das Minimum der Steigung oder der mit dem Minimum der Steigung zusammenhängende Wert Rₘᵢₙ mathematisch aus der Strom-Spannungskennlinie ermittelt, beispielsweise numerisch oder durch mathematische Ableitung der Strom-Spannungskennlinie.

In zwei vorteilhaften Ausführungsvarianten wird die Brennstoffzelle oder der Brennstoffzellenstapel 1 spannungsgeführt, d.h. mit einem Sollwert Uₛₒₗₗ für die Zellspannung oder die Ausgangsspannung, oder stromgeführt, d.h. mit einem Sollwert Iₛₒₗₗ für den Strom oder die Stromdichte, geregelt.

In einer vorteilhaften Ausführungsform wird durch Addition eines vorbestimmten Offsetwertes R_{offset} zum Wert für das Minimum der Steigung bzw zu dem mit dem Minimum der Steigung zusammenhängenden Wert Rₘᵢₙ zunächst ein Summenwert Rsumme = Rₘᵢₙ + R_{offset} ermittelt und mit Hilfe der Strom-Spannungskennlinie ein dem Summenwert entsprechender Wert für die Zellspannung oder Ausgangsspannung Uₛₒₗₗ oder für den Strom oder die Stromdichte Iₛₒₗₗ bestimmt, der für die Regelung der Brennstoffzelle oder des Brennstoffzellenstapels 1 als Sollwert dient.

Im Folgenden wird beispielhaft davon ausgegangen, dass der Wert Rₘᵢₙ für das Minimum der Steigung der Strom-Spannungskennlinie der Brennstoffzelle beziehungsweise des Brennstoffzellenstapels dem Wert des flächenbezogenen Widerstandes ASR im Minimum der Steigung entspricht.

Fig. 6 zeigt einen typischen Verlauf ASR(I) des flächenbezogenen Widerstandes ASR einer Brennstoffzelle in Abhängigkeit der Stromdichte I. Der gezeigte Verlauf wurde erhalten, indem die Ausgangsspannung einer Brennstoffzelle in Abhängigkeit der Stromdichte I erfasst und anschliessend durch mathematische Ableitung die Steigung, d.h. der flächenbezogene Widerstand ASR(I) ermittelt wurde. Der Verlauf ASR(I) des flächenbezogenen Widerstandes hat, wie in Fig. 6 gezeigt, ein für Brennstoffzellen charakteristisches Minimum ASRₘᵢₙ.

Entsprechend der im vorhergehenden Abschnitt beschriebenen Ausführungsform des Verfahrens wird durch Addition eines vorbestimmten Offsetwertes ASR_{offse}t zum Wert ASRₘᵢₙ für das Minimum der Steigung zunächst ein Summenwert R_{Summe} = ASRₘᵢₙ + ASR_{offse}t ermittelt, in Fig. 6 als ASRₒₚₜ bezeichnet, und mit Hilfe der Strom-Spannungskennlinie ein dem Summenwert ASRₒₚₜ entsprechender Wert für die Ausgangsspannung Uₛₒₗₗ oder für die Stromdichte Iₛₒₗₗ bestimmt, der für die Regelung der Brennstoffzelle oder des Brennstoffzellenstapels 1 als Sollwert dient. Der dem Summenwert ASRₒₚₜ entsprechender Wert I1 für die Stromdichte kann in Fig. 6 direkt dem Verlauf von ASR(I) entnommen werden.

Der Wert von ASRₘᵢₙ ändert sich in Abhängigkeit der eingesetzten Brennstoffzellen, der Degradation, der Brennstoffmenge, der Brennstoffqualität und allfälliger Leckagen. Typisch liegt der Wert von ASRₘᵢₙ im Bereich zwischen 0.3 Ω cm² und 1.0 Ω cm². Der Offsetwert ASR_{offset} ist charakteristisch für das jeweilige Brennstoffzellenkonzept, und kann durch Versuche ermittelt werden. Typisch liegt der Offsetwert ASR_{offset} zwischen 0.3 Ω cm² und 1.0 Ω cm², vorzugsweise zwischen 0.5 Ω cm² und 0.8 Ω cm².

In der Praxis muss nicht der gesamte Verlauf von ASR(I) erfasst werden. Vielmehr reicht es aus, aus der Strom-Spannungskennlinie zunächst den Wert ASRₘᵢₙ für das Minimum der Steigung zu ermitteln. Aus dem jeweils ermittelten Wert ASRₘᵢₙ und dem für die jeweilige Brennstoffzellentechnologie charakteristischen Offsetwert ASR_{offset} wird durch Addition der Summenwert ASRₒₚₜ = ASRₘᵢₙ + ASR_{offset} ermittelt. Die Strom-Spannungskennlinie wird nun soweit erfasst und ausgewertet, bis die Steigung den Wert ASRₒₚₜ erreicht. An diesem Punkt wird der korrespondierende Wert der Stromdichte Iₛₒₗₗ, der in Fig. 6 dem Wert der Stromdichte I1 entspricht, und/oder der korrespondierende Wert der Spannung Uₛₒₗₗ ermittelt.

Mit Vorteil wird der Brennstoffzellenstapel anschliessend spannungsgeführt mit U = Uₒₚₜ geregelt und/oder betrieben.

In einer weiteren vorteilhaften Ausführungsform wird im Betrieb nach mindestens 200 h oder mindestens 500 h oder mindestens 1000 h oder alle 200 h oder 500 h oder alle 1000 h eine Strom-Spannungskennlinie der Brennstoffzelle bzw. des Brennstoffzellenstapels erfasst wird und aus der erfassten Strom-Spannungskennlinie der Sollwert neu bestimmt wird.

Das Verhalten bei gealterter Brennstoffzelle wird an Hand von Fig. 7 erläutert. In Fig. 7 sind der ASR-Verlauf der Brennstoffzelle aus Fig. 6 (Verlauf ASR₁(I)) und beispielhaft derjenige einer gealterten Brennstoffzelle (Verlauf ASR₂(I)) gezeigt. Man erkennt, dass sich trotz Unterschiede in den aus den jeweiligen ASR-Verläufen bestimmten Summenwerten ASRₒₚₜ₁ bzw. ASRₒₚₜ₂ ein nahezu gleich hoher Wert für den Sollwert der Stromdichte ergibt (I1 ≈ I2). Trotz Alterung der Zelle kann der Stapel nahe bei der Maximalleistung, d.h. nahe am Optimum betrieben werden.

Das Verhalten bei veränderter Brenngasqualität oder bei verändertem Brenngasstrom wird an Hand von Fig. 8 erläutert. In Fig. 8 sind der ASR-Verlauf der Brennstoffzelle aus Fig. 6 (Verlauf ASR₁(I)) und beispielhaft derjenige einer Brennstoffzelle, die mit einem um 10 % geringeren Brenngasstrom betrieben wird, gezeigt (Verlauf ASR₃(I)). Man erkennt, dass die aus den jeweiligen ASR-Verläufen bestimmten Summenwerten ASRₒₚₜ₁ bzw. ASRₒₚₜ₃ nahezu gleich gross sind. Aus den unterschiedlichen Kurvenverläufen ASR₁(I) und ASR₃(I) ergeben sich jedoch deutlich verschiedene Sollwerte für die Stromdichte (I1 # I3).

Ein zusätzlicher Nutzen des oben beschriebenen Verfahrens und der oben beschriebenen Regelvorrichtung zur Regelung einer Brennstoffzelle oder eines Brennstoffzellenstapels ergibt sich, wenn Gasdurchfluss-Sensoren eingesetzt werden, mit denen der Brenngasfluss und der minimale Luftbedarf (Lₘᵢₙ) der eingesetzten Gase hinreichend genau bestimmt werden können. In diesem Fall kann die Stromdichte im optimalen Betriebspunkt über das Faradaysche Gesetz berechnet werden. Die beschriebene Methode kann dann zur Überwachung oder auch Kalibrierung des Sensors während des Betriebs verwendet werden. Kalibrierte Sensoren sind derzeit nicht zu Preisen erhältlich, die einen Einsatz in kleinen Brennstoffzellen-Geräten sinnvoll erscheinen lassen.

Das Verfahren und die Regelvorrichtung zur Regelung einer Brennstoffzelle oder eines Brennstoffzellenstapels sowie die Brennstoffzelle und der Brennstoffzellenstapel gemäss vorliegender Erfindung haben den Vorteil, dass die Brennstoffzelle bzw. der Brennstoffzellenstapel sicher betrieben werden können, selbst wenn die Betriebsbedingungen im Laufe der Zeit ändern, da Einflussgrössen, wie die Alterung der Brennstoffzellen, die Brennstoffmenge, die Brennstoffqualität und allfällige Leckagen, im Steigungsverlauf der Strom-Spannungskennlinie abgebildet sind, und damit bei der Regelung der Brennstoffzelle oder des Brennstoffzellenstapels berücksichtigt werden. Dies ermöglicht einen sicheren Betrieb der Brennstoffzelle oder des Brennstoffzellenstapels nahe bei der Maximalleistung, d.h. nahe am Optimum.

## Patentansprüche

1. Verfahren zur Regelung einer Brennstoffzelle oder eines Brennstoffzellenstapels (1), wobei in dem Verfahren eine Strom-Spannungskennlinie der Brennstoffzelle bzw. des Brennstoffzellenstapels erfasst und ausgewertet wird, um einen Betriebspunkt der Brennstoffzelle bzw. des Brennstoffzellenstapels zu bestimmen, **dadurch gekennzeichnet, dass** im Betrieb in zeitlichen Abständen eine Strom-Spannungskennlinie der Brennstoffzelle bzw. des Brennstoffzellenstapels (1) erfasst wird, deren Steigung ein Minimum hat, dass jeweils aus der erfassten Strom-Spannungskennlinie ein Wert für das Minimum der Steigung oder ein mit dem Minimum der Steigung zusammenhängender Wert (Rₘᵢₙ) ermittelt wird, dass durch eine mathematische Verknüpfung des ermittelten Wertes mit einem vorbestimmten Offsetwert (R_{offset}), insbesondere durch Addition eines vorbestimmten Offsetwertes zum ermittelten Wert, ein Sollwert für den Betriebspunkt bestimmt wird, und dass die Brennstoffzelle oder der Brennstoffzellenstapel (1), mit dem derart bestimmten Sollwert geregelt wird.

2. Verfahren nach Anspruch 1, wobei die Brennstoffzelle oder der Brennstoffzellenstapel über einen regelbaren Verbraucher (3) oder eine regelbare Stromsenke, die mit dem Ausgang (9) der Brennstoffzelle oder des Brennstoffzellenstapels (1) verbunden sind, geregelt werden.

3. Verfahren nach einem der Ansprüche 1 oder 2, wobei der regelbare Verbraucher (3) ein Spannungswandler oder ein Wechselrichter ist, deren Ausgänge mit einem Stromnetz (3') verbindbar sind.

4. Verfahren nach einem der Ansprüche 1 bis 3, wobei der Wert für das Minimum der Steigung der Wert des Innenwiderstandes oder des flächenbezogenen Innenwiderstandes, im Englischen Area Specific Resistance oder ASR genannt, der Brennstoffzelle oder des Brennstoffzellenstapels im Minimum der Steigung ist, oder wobei der mit dem Minimum der Steigung zusammenhängende Wert (Rₘᵢₙ) mit dem Wert des Innenwiderstandes oder des flächenbezogenen Innenwiderstandes der Brennstoffzelle oder des Brennstoffzellenstapels im Minimum der Steigung verknüpft ist.

5. Verfahren nach einem der Ansprüche 1 bis 4, wobei der Wert für das Minimum der Steigung oder der mit dem Minimum der Steigung zusammenhängende Wert (Rₘᵢₙ) mathematisch aus der Strom-Spannungskennlinie ermittelt wird, insbesondere numerisch oder durch mathematische Ableitung aus der Strom-Spannungskennlinie ermittelt wird.

6. Verfahren nach einem der Ansprüche 1 bis 5, wobei die Brennstoffzelle oder der Brennstoffzellenstapel spannungsgeführt, d.h. mit einem Sollwert (Uₛₒₗₗ) für die Zellspannung oder die Ausgangsspannung, oder stromgeführt, d.h. mit einem Sollwert (Iₛₒₗₗ) für den Strom oder die Stromdichte, geregelt wird.

7. Verfahren nach einem der Ansprüche 1 bis 6, wobei durch Addition eines vorbestimmten Offsetwertes (R_{offset}) zum Wert (Rₘᵢₙ) für das Minimum der Steigung bzw zu dem mit dem Minimum der Steigung zusammenhängenden Wert (Rₘᵢₙ) zunächst ein Summenwert (Rsumme = Rₘᵢₙ + R_{offset}) ermittelt wird, und wobei mit Hilfe der Strom-Spannungskennlinie ein dem Summenwert entsprechender Wert für die Zellspannung oder Ausgangsspannung (Uₛₒₗₗ) oder für den Strom oder die Stromdichte (Iₛₒₗₗ) bestimmt wird, der für die Regelung der Brennstoffzelle oder des Brennstoffzellenstapels (1) als Sollwert dient.

8. Verfahren nach einem der Ansprüche 1 bis 7, wobei im Betrieb nach mindestens 200 h oder mindestens 500 h oder mindestens 1000 h oder alle 200 h oder 500 h oder alle 1000 h eine Strom-Spannungskennlinie der Brennstoffzelle bzw. des Brennstoffzellenstapels (1) erfasst wird und aus der erfassten Strom-Spannungskennlinie der Sollwert neu bestimmt wird.

9. Regelvorrichtung (8) für eine Brennstoffzelle, einen Brennstoffzellenstapel (1) oder ein Brennstoffzellensystem, eingerichtet, um die Brennstoffzelle bzw. den Brennstoffzellenstapel bzw. das Brennstoffzellensystem mittels eines Verfahrens nach einem der Ansprüche 1 bis 8 zu regeln.

10. Regelvorrichtung nach Anspruch 9, wobei die Regelvorrichtung (8) mit einem Ausgang (9) der Brennstoffzelle bzw. des Brennstoffzellenstapels (1) verbunden ist, enthaltend eine Mess- und Regeleinheit (6), die eingerichtet ist, um eine Strom-Spannungskennlinie der Brennstoffzelle bzw. des Brennstoffzellenstapels bzw. des Brennstoffzellensystems zu erfassen und aus der erfassten Strom-Spannungskennlinie einen Wert für das Minimum der Steigung oder einen mit dem Minimum der Steigung zusammenhängenden Wert (Rₘᵢₙ) zu ermitteln, um durch eine mathematische Verknüpfung des ermittelten Wertes mit einem vorbestimmten Offsetwert (R_{offset}), insbesondere durch Addition eines vorbestimmten Offsetwertes zum ermittelten Wert, einen Sollwert für den Betriebspunkt zu bestimmen, und um die Brennstoffzelle bzw. den Brennstoffzellenstapel bzw. das Brennstoffzellensystem mit dem derart bestimmten Sollwert zu regeln.

11. Regelvorrichtung nach einem der Ansprüche 9 oder 10 enthaltend zusätzlich einen regelbaren Verbraucher (3) oder eine regelbare Stromsenke, die mit dem Ausgang der Brennstoffzelle oder des Brennstoffzellenstapels (1) verbindbar sind, um die Brennstoffzelle oder den Brennstoffzellenstapel über den regelbaren Verbraucher beziehungsweise die regelbare Stromsenke zu regeln.

12. Brennstoffzelle oder Brennstofifzellenstapel oder Brennstoffzellensystem mit einer Regelvorrichtung (8) nach einem der Ansprüche 9 bis 11.

## Claims

1. A method for regulating a fuel cell or a fuel cell stack (1), wherein a current-voltage characteristic of the fuel cell or of the fuel cell stack is detected and evaluated in the method to determine an operating point of the fuel cell or of the fuel cell stack, **characterized in that** a current-voltage characteristic of the fuel cell or of the fuel cell stack (1) is detected at time intervals in operation whose gradient has a minimum; **in that** a value for the minimum of the gradient or a value (Rₘᵢₙ) related to the minimum of the gradient is respectively determined from the detected current-voltage characteristic; **in that** a desired value is determined for the operating point by a mathematical linking of the determined value with a predefined offset value (R_{offset}), in particular by addition of a predefined offset value to the determined value; and **in that** the fuel cell or the fuel cell stack (1) is regulated using the desired value thus determined.

2. A method in accordance with claim 1, wherein the fuel cell or the fuel cell stack are regulated via a regulable consumer (3) or a regulable current sink which are connected to the output (9) of the fuel cell or of the fuel cell stack (1).

3. A method in accordance with one of the claims 1 or 2, wherein the regulable consumer (3) is a voltage converter or an inverter whose outputs are connectable to a power grid (3').

4. A method in accordance with any one of the claims 1 to 3, wherein the value for the minimum of the gradient is the value of the internal resistance or of the area specific resistance (ASR) of the fuel cell or of the fuel cell stack in the minimum of the gradient or wherein the value (Rₘᵢₙ) related to the minimum of the gradient is from case to case linked with the value of the internal resistance or of the area specific resistance of the fuel cell or of the fuel cell stack in the minimum of the gradient.

5. A method in accordance with any one of the claims 1 to 4, wherein the value for the minimum of the gradient or the value (Rₘᵢₙ) related to the minimum of the gradient is mathematically determined from the current-voltage characteristic, in particular numerically or by mathematical derivation from the current-voltage characteristic.

6. A method in accordance with any one of the claims 1 to 5, wherein the fuel cell or the fuel cell stack is voltage controlled, i.e. regulated with a desired value (Uₛₒₗₗ) for the cell voltage or the output voltage, or it is current controlled, i.e. regulated with a desired value (Iₛₒₗₗ) for the current or the current density.

7. A method in accordance with any one of the claims 1 to 6, wherein first a sum value (R_{Summe} = Rₘᵢₙ + R_{offset}) is determined by addition of a predefined offset value (R_{offset}) to the value (Rₘᵢₙ) for the minimum of the gradient or to the value (Rₘᵢₙ) related to the minimum of the gradient and wherein a value corresponding to the sum value is determined with the aid of the current-voltage characteristic for the cell voltage or for the output voltage (Uₛₒₗₗ) or for the current or for the current density (Iₛₒₗₗ) which serves as a desired value for the regulation of the fuel cell or of the fuel cell stack (1).

8. A method in accordance with any one of the claims 1 to 7, wherein a current-voltage characteristic of the fuel cell or of the fuel cell stack (1) is detected in operation after at least 200 h or at least 500 h or at least 1000 h or every 200 h or 500 h or every 1000 h and the desired value is determined again from the detected current-voltage characteristic.

9. A regulating apparatus (8) for a fuel cell, a fuel cell stack (1) or a fuel cell system, configured to regulate the fuel cell or the fuel cell stack or the fuel cell system by means of a method in accordance with any one of the claims 1 to 8.

10. A regulating apparatus in accordance with claim 9, wherein the regulating apparatus (8) is connected to an output (9) of the fuel cell or of the fuel cell stack (1), containing a measuring and regulating unit (6) which is configured to detect a current-voltage characteristic of the fuel cell or of the fuel cell stack and to determine a value for the minimum of the gradient or a value (Rₘᵢₙ) related to the minimum of the gradient from the detected current-voltage characteristic in order to determine a desired value for the operating point by a mathematical linking of the determined value with a predefined offset value (R_{offset}) by addition of a predefined offset value to the determined value and in order to regulate the fuel cell or the fuel cell stack or the fuel cell system using the desired value determined in this manner.

11. A regulating apparatus in accordance with one of the claims 9 or 10, additionally containing a regulable consumer (3) or a regulable current sink which can be connected to the output of the fuel cell or of the fuel cell stack (1) to regulate the fuel cell or the fuel cell stack via the regulable consumer or the regulable current sink.

12. A fuel cell or fuel cell stack or fuel cell system having a regulating apparatus (8) in accordance with any one of the claims 9 to 11.

## Revendications

1. Procédé de régulation d'une cellule à combustible ou d'un empilement de cellules à combustible (1), une courbe caractéristique courant-tension de la cellule à combustible ou de l'empilement de cellules à combustible étant mesurée et analysée afin de déterminer un point de fonctionnement de la cellule à combustible ou de l'empilement de cellules à combustible, **caractérisé en ce que**, pendant le fonctionnement, à des intervalles réguliers, une courbe caractéristique courant-tension de la cellule à combustible ou de l'empilement de cellules à combustible (1) est mesurée, dont la pente présente un minimum, **en ce que**, à partir de la courbe caractéristique de tension, une valeur pour le minimum de la pente ou une valeur (Rₘᵢₙ) liée au minimum de la pente est déterminée, **en ce que**, grâce à une liaison mathématique de la valeur déterminée avec une valeur d'offset (R_{offset}), plus particulièrement grâce à l'addition d'une valeur d'offset prédéterminée à la valeur déterminée, une valeur de consigne est déterminée pour le point de fonctionnement et **en ce que** la cellule à combustible ou l'empilement de cellules à combustible (1) est régulé avec la valeur de consigne ainsi déterminée.

2. Procédé selon la revendication 1, la cellule à combustible ou l'empilement de cellules à combustible étant régulé par l'intermédiaire d'un consommateur réglable (3) ou d'un puits de courant, qui est relié à la sortie de la cellule à combustible ou de l'empilement de cellules à combustible (1).

3. Procédé selon l'une des revendications 1 ou 2, le consommateur réglable (3) étant un convertisseur de tension ou un onduleur dont les sorties peuvent être reliées à un réseau électrique (3').

4. Procédé selon l'une des revendications 1 à 3, la valeur du minimum de la pente étant appelé valeur de résistance interne ou de la résistance interne superficielle spécifique, en anglais Area Specific Resistance ou ASR, de la cellule à combustible ou de l'empilement de cellules à combustibles au minimum de la pente ou la valeur relative au minimum de la pente (Rₘᵢₙ) est associée avec la valeur de résistance interne ou de la résistance interne superficielle spécifique de la cellule à combustible ou de l'empilement de cellules à combustible au minimum de la pente.

5. Procédé selon l'une des revendications 1 à 4, la valeur du minimum de la pente ou la valeur relative au minimum de la pente (Rₘᵢₙ) étant déterminée mathématiquement à partir de la courbe caractéristique de tension, plus particulièrement numériquement ou à l'aide d'une dérivation mathématique à partir de la courbe caractéristique courant-tension.

6. Procédé selon l'une des revendications 1 à 5, la cellule à combustible ou l'empilement de cellules à combustible étant guidé par la tension, c'est-à-dire régulé avec une valeur de consigne (Uₛₒₗₗ) pour la tension de la cellule ou la tension de sortie, ou guidée par le courant, c'est-à-dire régulé avec une valeur de consigne (Iₛₒₗₗ) pour le courant ou la densité de courant.

7. Procédé selon l'une des revendications 1 à 6, une valeur de somme (R_{Summe} = Rₘᵢₙ + R_{offset}) étant d'abord déterminée grâce à une addition d'une valeur d'offset prédéterminée (R_{offset}) à la valeur (Rₘᵢₙ) du minimum de la pente ou à la valeur relative au minimum de la pente (Rₘᵢₙ), et à l'aide de la courbe caractéristique courant-tension, une valeur correspondant à la valeur de somme étant déterminée pour la tension de la cellules ou la tension de sortie (Uₛₒₗₗ) ou pour le courant ou la densité de courant (Iₛₒₗₗ) qui sert de valeur de consigne pour réguler la cellule à combustible ou l'empilement de cellules à combustible (1).

8. Procédé selon l'une des revendications 1 à 7, pendant le fonctionnement, après au moins 200 h ou au moins 500 h ou au moins 1000 h ou toutes les 200 h ou 500 h ou toutes les 1000 h, une courbe caractéristique courant-tension de la cellule à combustible ou de l'empilement de cellules à combustible (1) est mesurée et la valeur de consigne est à nouveau déterminé à partir de la courbe caractéristique courant-tension mesurée.

9. Dispositif de régulation (8) pour une cellule de combustible, un empilement de cellules à combustible (1) ou un système de cellule à combustible, configuré pour réguler la cellule à combustible ou l'empilement de cellules à combustible (1) ou le système de cellule à combustible à l'aide d'un procédé selon l'une des revendications 1 à 8.

10. Dispositif de régulation selon la revendication 9, le dispositif de régulation (8) étant relié à une sortie (9) de la cellule à combustible ou de l'empilement de cellules à combustible (1), contenant une unité de mesure et de régulation (6) configurée afin de mesurer une courbe caractéristique courant-tension de la cellule à combustible ou de l'empilement de cellules à combustible ou du système de cellule à combustible et, à partir de la courbe caractéristique courant-tension, de déterminer une valeur pour le minimum de la pente ou une valeur relative au minimum de la pente (Rₘᵢₙ), afin, grâce à une association mathématique de la valeur déterminée avec une valeur d'offset (R_{offset}) prédéterminée, plus particulièrement par l'addition d'une valeur d'offset prédéterminée à la valeur déterminée, de déterminer une valeur de consigne pour le point de fonctionnement et afin de réguler la cellule à combustible ou l'empilement de cellules à combustible ou le système de cellule à combustible avec la valeur de consigne ainsi déterminée.

11. Dispositif de régulation selon l'une des revendications 9 ou 10, contenant en outre un consommateur réglable (3) ou un puits de courant réglable, pouvant être relié à la sortie de la cellule à combustible ou de l'empilement de cellules à combustible (1), afin de réguler la cellule à combustible ou l'empilement de cellules à combustible par l'intermédiaire du consommateur réglable ou le puits de courant réglable.

12. Cellule à combustible ou empilement de cellules à combustible ou système de cellule à combustible avec un dispositif de régulation (8) selon l'une des revendications 9 à 11.
